Europäisches Patentamt

European Patent Office

Office européen des brevets

(19)

(11) Veröffentlichungsnummer: **0 342 262 B1**

## (12) EUROPÄISCHE PATENTSCHRIFT

(45) Veröffentlichungstag der Patentschrift: **12.08.92**

(51) Int. Cl.⁵: **B60D 1/14**

(21) Anmeldenummer: **88108169.9**

(22) Anmeldetag: **20.05.88**

(54) **Zusammenklappbare Stange, insbesondere zum Schleppen von Fahrzeugen.**

(43) Veröffentlichungstag der Anmeldung:
**23.11.89 Patentblatt  89/47**

(45) Bekanntmachung des Hinweises auf die
Patenterteilung:
**12.08.92 Patentblatt  92/33**

(84) Benannte Vertragsstaaten:
**AT BE CH ES FR GB GR LI LU NL SE**

(56) Entgegenhaltungen:
DE-A- 2 328 693      DE-A- 2 450 779
DE-A- 2 638 127      DE-C- 548 564
DE-U- 7 201 101      DE-U- 7 411 475
FR-A- 2 271 065      US-A- 2 174 468

(73) Patentinhaber: **CENTRO VERTRIEBS GMBH
St. Benedikt Str. 19
W-8044 Unterschleissheim(DE)**

(72) Erfinder: **Bruni, Fabio
Piazza della Chiesa 10
Rallo Tassullo(IT)**

(74) Vertreter: **Melzer, Wolfgang, Dipl.-Ing. et al
Patentanwälte Mitscherlich, Gunschmann,
Körber, Schmidt-Evers, Melzer Steinsdorfstrasse 10
W-8000 München 26(DE)**

EP 0 342 262 B1

# Beschreibung

Die Erfindung betrifft eine zusammenklappbare Abschleppstange nach dem Oberbegriff des Anspruch 1.

Für Kraftfahrzeuge, die eine Panne haben, sind viele Abschleppvorrichtungen bekannt, die im wesentlichen folgenden zwei Arten angehören: Abschleppseile und starre Abschleppstangen.

Die zuerst genannten Abschleppvorrichtungen bestehen aus einem Seil, das entweder als Drahtseil oder als Kunstfaserseil ausgebildet sein kann und Einhängevorrichtungen an seinen Enden sowie gegebenenfalls eine federnde Ruckdämpfungsvorrichtung aufweist.

Der Nachteil dieser erstgenannten, bekannten Lösung besteht darin, daß das Abschleppseil nur in gespanntem Zustand zur Wirkung kommt und infolgedessen der Abschleppbetrieb ruckweise erfolgt, da das geschleppte Fahrzeug niemals die selbe Fahrweise wie das Schleppfahrzeug aufweisen kann.

Im Falle einer Panne in der Bremsanlage des geschleppten Fahrzeugs kann zum Abschleppen kein Seil verwendet werden, da dieses nicht imstande ist, eine Bremskraft zwischen den beiden Fahrzeugen zu übertragen.

Die starre Abschleppstange verbindet dagegen die beiden Kraftfahrzeuge derart, daß das geschleppte Fahrzeug sowohl die Zug- als auch die Bremswirkung des Schleppfahrzeugs erfährt. Dadurch wird ein sicherer und bequemer Abschleppbetrieb erzielt.

Eine Abschleppstange der eingangs angegebenen Art ist in der DE-A-26 38 127 beschrieben. Bei dieser bekannten Abschleppstange sind Schwenkscharniere an den Seitenwänden und in den Endbereichen von einen Rechteckquerschnitt aufweisenden Rohrabschnitten befestigt, die die Stangenabschnitte bilden. Die Arretiereinrichtungen für die Gelenke sind durch U-Elemente gebildet, die, soweit entnehmbar, fest am Ende jeweils eines der Rohrabschnitte befestigt sind, wobei ein unter Federvorspannung stehender Querstift, der in dem zugehörigen Ende des jeweils anderen Rohrabschnitts abgestützt ist, im gestreckten Zustand der Stangenabschnitte nach Art einer Schnappverbindung in eine Öffnung im zugehörigen U-Element einrasten kann. Nachteilig ist, daß nicht nur beim Einklappen der Abschleppstange die Querstifte gegen die Federkraft eingedrückt werden müssen, sondern auch beim Auseinanderklappen, was einer automatischen und daher einfach handhabbaren Verbringung der Abschleppstange in ihre gestreckte Stellung entgegensteht. Darüber hinaus erscheint diese Lösung auch aus statischen Gründen in ihrer Festigkeit äußerst ungünstig zu sein. An den Stangenenden der äußeren Stangenabschnitte sind die Einhängeeinrichtungen mittels einer Schraubverbindung angeordnet, was offenbar eine Verdrehung der zugehörigen Einhängeeinrichtung erlaubt. Die Sicherung für die Einhängevorrichtungen besteht offenbar aus einer Hülse, die längs des als C-Profil ausgebildeten Hakens verschiebbar ist und mittels einer Rändelmutter gesichert werden kann. Außerdem entstehen bei der bekannten Abschleppstange bei Zugbelastung aufgrund exzentrischer Anordnung der Verbindungselemente, Querkraftkomponenten, die Biegebeanspruchungen der Abschleppstange hervorrufen. Abgesehen davon, daß die Konstruktion sehr umständlich und kompliziert ist und insbesondere eine einfache Handhabung auch bei schlechten Witterungsbedingungen nicht ermöglicht, ist zu bezweifeln, ob allen statischen Anforderungen einerseits bei der Verbindung benachbarter Stangenabschnitte und andererseits auch bei der Verbindung mit den Einhängeeinrichtungen genügt werden kann.

Der Erfindung liegt die Aufgabe zugrunde, eine Abschleppstange der eingangs genannten Art hinsichtlich einer zuverlässigen und einfachen Benutzung sowie kostengünstigen Konstruktion zu verbessern.

Diese Aufgabe wird durch die Merkmale des Anspruchs 1 gelöst.

Vorteilhafte Weiterbildungen der Erfindung sind in den Unteransprüchen beschrieben.

Bei der erfindungsgemäßen Abschleppstange sind nicht nur die Nachteile der bekannten Ausgestaltung beseitigt, sondern es ist eine Abschleppstange geschaffen, die im Abschleppbetrieb starr ist, jedoch bei Nichtbenutzung derart zusammengeklappt werden kann, daß sie einen möglichst kleinen Platzbedarf aufweist und deshalb auch im gewöhnlichen Fahrzeug mitgeführt werden kann sowie eine zuverlässige und einfache Benutzung und auch eine kostensparende Konstruktion aufweist.

Weitere Merkmale und Vorteile der Erfindung ergeben sich aus der nachstehenden ausführlichen Beschreibung einer bevorzugten, jedoch nicht ausschließlichen Ausführungsform, die beispielsweise, jedoch nicht einschränkend in den beiliegenden Zeichnungen dargestellt ist. Es zeigen:

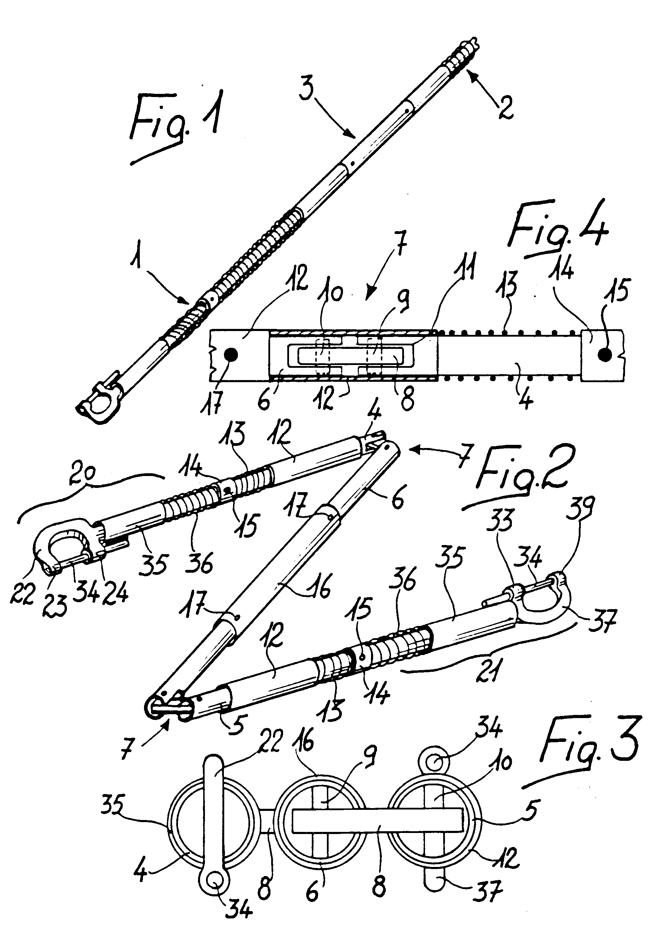

Fig. 1 eine erfindungsgemäße Abschleppstange in voll aufgeklapptem d.h. gestrecktem Zustand.

Fig. 2 die Abschleppstange in fast vollständig zusammengeklapptem Zustand.

Fig. 3 die aneinander genäherte Lage von drei Stangenabschnitten der zusammengeklappten Abschleppstange, in stirnseitigem Aufriß.

Fig. 4 einen Schnitt durch die Kupplung zwischen zwei aufeinanderfolgenden Stangenabschnitten in ihrer zueinander fluchtenden, d.h. aufgeklappten Stellung.

Fig. 5 die um 180° geknickte Kupplung nach Fig. 4.

Fig. 6 einen Schnitt durch das Stangenende, das mit einer diesem Ende drehbar zugeordneten, in geschlossenem Zustand dargestellten Einhängevorrichtung versehen ist.

Fig. 7 das Stangenende mit einer festen, in geöffnetem Zustand dargestellten Einhängevorrichtung.

Bezugnehmend auf die genannten Figuren besteht die erfindungsgemäße Abschleppstange im dargestellten Ausführungsbeispiel aus drei Stangenabschnitten und zwar aus zwei Endabschnitten 1, 2 und einem mittleren Stangenabschnitt 3.

Die Endabschnitte 1 und 2 sind im wesentlichen untereinander gleich ausgebildet und bestehen aus Stahlrohrstücken 4,5, die eine korrosionshemmende Oberflächenbehandlung aufweisen. Auch alle anderen Teile der Stange weisen eine solche Korrosionsschutzbehandlung auf.

Der mit 3 bezeichnete mittlere Stangenabschnitt besteht ebenfalls aus einem gleichartigen Stahlrohr 6. Die endseitige Verbindung zweier aufeinanderfolgender Stangenabschnitte, z.B. 1 und 3 bzw. 2 und 3 erfolgt mit Hilfe einer Kupplung 7, die ein Zusammenklappen der beiden Teile um 180° gestattet.

Die genannte Kupplung 7 besteht aus einer Anlenklasche 8, deren beide Enden mit Hilfe von Zapfen 9 und 10 derart drehbar mit den Enden der Stangenabschnitte 1, 2, 3 verbunden sind, daß ein doppeltes Gelenk entsteht, das infolge einer passenden Länge der Anlenklasche 8 eine parallel nebeneinanderliegende Stellung der genannten Stangenabschnitte 1, 2, 3 in ihrem zusammengeklappten Zustand gestattet.

Um die Drehung der genannten Anlenklasche 8 zu ermöglichen, ist im zugehörigen Endteil jedes Stangenabschnittst 1, 2, 3 im Bereich der Anlenklasche 8 ein Schlitz 11 vorgesehen.

Im Bereich der genannten Kupplung 7 ist eine Kupplungsübergreifvorrichtung vorgesehen. Diese besteht aus einer metallischen Überschiebemuffe 12, die in der zueinander fluchtenden, aufgeklappten Stellung der beiden ihr benachbarten Stangenabschnitte ganz über die Kupplung 7 geschoben werden kann und in dieser Stellung das Zusammenklappen der Stangenabschnitte verhindert.

Die Überschiebemuffe 12 wird in ihrer über die Kupplung 7 geschobenen Stellung durch eine zylindrische Schraubenfeder 13 gehalten, deren Innendurchmesser etwas größer als der Außendurchmesser des zugehörigen Stangenabschnitts ist. Die genannte Feder 13 ist zwischen der Überschiebemuffe 12 und einem am sie tragenden Stangenabschnitt durch einen Niet 15 befestigten Bundring 14 eingespannt. Ein zweiter, am mittleren Stangenabschnitt 3 durch zwei Nieten 17 befestigter Bundring 16 wirkt als Endanschlag für die richtige Einstellung der Überschiebemuffe 12 in ihrer Kupplungsübergreifstellung.

Zum Zusammenklappen zweier Stangenabschnitte muß die Überschiebemuffe 12 unter Zusammendrückung der Feder 13 so weit verschoben werden, bis die ganze Kupplung 7 freiliegt und infolgedessen die Drehung der einzelnen Teile um die Zapfen 9 und 10 ermöglicht wird. Werden dagegen die beiden Stangenabschnitte aufgeklappt, d.h. fluchtend zueinander eingestellt, wird die Überschiebemuffe 12 durch den Druck der Feder 13 automatisch über die Kupplung 7 geschoben und verriegelt wodurch die beiden Stangenabschnitte in ihrer aufgeklappten, zueinander fluchtenden Stellung verriegelt werden.

An den beiden freien Stangenenden 18 und 19 sind zwei Einhängevorrichtungen 20 bzw. 21 vorgesehen, von denen die erste drehbar dem betreffenden Stangenende 18 zugeordnet ist.

Die genannte Einhängevorrichtung 20 besteht im wesentlichen aus einem widerstandsfähigen, C-förmigen, warmgeformten Metallbügel 22, dessen Enden 23 und 24 mit Bohrungen 25 bzw. 26 versehen sind. Die gemeinsame Achse dieser Bohrungen ist parallel zur Achse des zugehörigen Rohrstücks 4 gerichtet.

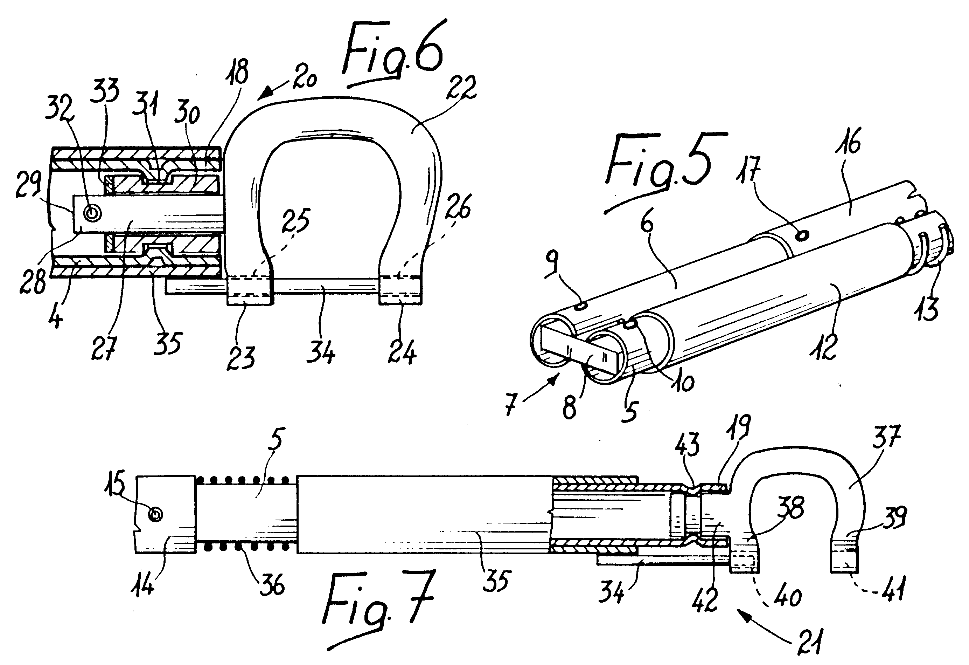

Bezugnehmend auf Fig. 6, weist der genannte C-förmige Bügel 22 auf seiner linken Seite einen zylindrischen Ansatz 27 auf, der sich in Längsrichtung, d.h. parallel zur Achse der Bohrungen 25 und 26 erstreckt.

Der Ansatz 27 ist an seinem freien Ansatzende 28 mit einer Querbohrung 29 versehen und in einer Buchse 30 gelagert. Der Außendurchmesser dieser Buchse ist etwas kleiner als der Innendurchmesser des rohrförmigen Stangenendes 18. Die Buchse 30 weist eine umlaufende äußere Nut 31 auf.

Nach dem Einschieben des Ansatzes 27 in die Buchse 30, springt das genannte freie Ansatzende 28 so weit aus der Buchse vor, daß in die Querbohrung 29 ein Stift 32 gesteckt werden kann. Zwischen dem Stift 32 und der Buchse 30 ist eine Unterlegscheibe 33 zur Herabsetzung der Reibung angeordnet. Nach dem Einschieben der Buchse 30 in das rohrförmige Stangenende 18 wird die Buchse 30 durch Einbuchtung der Wandung des Stangenendes 18 in die Nut 31 der Buchse 30 festgelegt.

Zum Öffnen und Schließen der genannten Einhängevorrichtung 20 ist ein Bolzen 34 vorgesehen, der einen kreisrunden Querschnitt aufweist und in die Bohrungen 25, 26 eingreift. Dieser Bolzen 34 ist mit einem Ende an einer Hülse 35 angeschweißt, die in Längsrichtung auf das Stangenende 18 das Rohrstück 4 geschoben ist. Diese Hülse 35 ist durch eine zylindrische Schraubenfeder 36 druckbelastet, die zwischen der Hülse 35 und dem feststehenden Bundring 14 eingespannt ist. Der linke Schenkel des C-förmigen Bügels bildet den Endanschlag für die genannte Hülse 35.

Der Verschiebeweg der Hülse 35 bis zur vollständigen Zusammendrückung der Feder 36 muß so lang sein, daß der dieser Hülse 35 zugeordnete, in die Bohrungen 25, 26 eingreifende Bolzen nur aus der Bohrung 26 ausgezogen werden kann und dadurch den C-förmigen Bügel 22 so weit öffnet, daß dieser an die dazu vorgesehene Stelle des Fahrzeugs eingehängt werden kann.

In ihrer Ruhestellung wird die Hülse 35 durch die Feder 36 in einer Endstellung gehalten, in der der Bolzen 34 in die Bohrung 26 eingreift und dadurch die Einhängevorrichtung schließt.

Die Einhängevorrichtung 21 besteht im wesentlichen aus einem widerstandsfähigen, C-förmigen, warmgeformten Metallbügel 37, dessen Enden 38 und 39 mit Bohrungen 40 bzw. 41 versehen sind. Die gemeinsame Achse dieser Bohrungen ist parallel zur Achse des Rohrstücks 5 gerichtet.

Bezugnehmend auf Fig. 7, weist der genannte C-förmige Bügel 37 auf seiner linken Seite einen zylindrischen, längsgerichteten Ansatz 42 auf, dessen Außendurchmesser etwas kleiner als der Innendurchmesser des Rohrstücks 5 ist.

Der genannte zylindrische Ansatz 42 ist mit einer umlaufenden Nut 43 versehen. Die Festlegung des zylindrischen Ansatzes nach seiner Einsteckung in das rohrförmige Stangenende 19 erfolgt durch Einbuchtung der Wandung des genannten Stangenendes 19 in die Nut 43.

Die Mittel zum Öffnen und Schließen der genannten Einhängevorrichtung 21 entsprechen im wesentlichen denjenigen zum Öffnen und Schließen der Einhängevorrichtung 20 und bestehen aus einem an einer Hülse 35 angeschweißten Bolzen 34 und einer zylindrischen, zwischen der Hülse 35 und dem festen Bundring 15 eingespannten Schraubenfeder 36.

Aus der obigen Beschreibung geht hervor, daß wenn alle Stangenabschnitte 1, 2 und 3 zueinander fluchtend eingestellt sind, die Abschleppstange infolge der Kupplungsübergreifvorrichtungen nicht zusammengeklappt werden kann und vollkommen starr bleibt, d.h. sich in dem bestmöglichen Zustand für einen sicheren Schleppbetrieb befindet.

Die Einhängung an die dazu vorgesehenen Stellen der Fahrzeuge erfolgt bequem durch Öffnen und Schließen der Einhängevorrichtungen 20, 21 mittels Axialverschiebung der Hülsen 35 und Zusammendrückung bzw. Entlastung der Federn 36.

Die der Abschleppstange drehbar zugeordnete Einhängevorrichtung 22 ermöglicht es, den Bügel 22 an jedes Fahrzeug in der erforderlichen Stellung einzuhängen.

Bei Nichtbenutzung der Abschleppstange wird diese mühelos zusammengeklappt, und sie nimmt dann einen geringen Platz ein, da sie im zusammengeklappten Zustand nicht sperrig ist.

Andererseits ist es nicht immer erforderlich, die Abschleppstange noch vor ihrer Verbindung mit den Fahrzeugen aufzuklappen und mit Hilfe der Kupplungsübergreifvorrichtungen zu versteifen. Vielmehr kann die Abschleppstange auch im zusammengeklappten Zustand an die Fahrzeuge eingehängt werden, z.B. wenn die zu verbindenden Fahrzeuge zu nahe hintereinander stehen bzw. nicht fluchtend zueinander ausgerichtet sind. Beim Anfahren des Schleppzugs stellen sich dann die Stangenabschnitte 1, 2, 3 automatisch fluchtend zueinander ein und die einzelnen Kupplungen 7 werden automatisch verriegelt, so daß eine starre Abschleppstange erhalten wird.

Selbstverständlich können je nach den Erfordernissen beliebige Werkstoffe und Abmessungen verwendet werden.

**Patentansprüche**

1. Zusammenklappbare Abschleppstange für Fahrzeuge, bestehend aus
mehreren starren aufeinanderfolgenden rohrförmigen Stangenabschnitten (1,2,3), die über 180°-Kupplungen (7) paarweise miteinander verbunden sind und in der ausgeklappten Stellung, in der ihre Rohrabschnitte (4,5,6) miteinander fluchten, mittels einer federnden Einrichtung arretierbar sind, wobei an den äußersten Enden jeweils gegen ungewolltes Aushängen sicherbare Einhängevorrichtungen (21,22) vorgesehen sind, wobei mindestens deren eine (22) gegenüber dem jeweiligen Rohrabschnitt (4) drehbar ausgebildet ist,
dadurch **gekennzeichnet,**
daß jede Kupplung (7) eine Anlenklasche (8) aufweist, deren Enden drehbar mit den Enden zweier aufeinanderfolgender Stangenabschnitte (1,2 bzw. 2,3) verbunden sind, wobei diese Enden der Stangenabschnitte (1,2 bzw. 2,3) mit Schlitzen (11) versehen sind, die ein seitliches Austreten der Anlenklasche (8) bei deren Verschwenkung in die zusammengeklappte Stellung zulassen, und wobei die Anlenklasche (8) eine solche Länge aufweist, daß der Abstand der Schwenkpunkte größer ist als die Summe der Außenhalbmesser der beiden Stangenabschnitte (1,2 bzw. 2,3), und daß die federnde Arretier-Einrichtung für jede der Kupplungen (7) eine Überschiebemuffe (12) aufweist, die die Kupplung (7) in der zueinander fluchtenden Stellung der beiden jeweiligen Stangenabschnitte (1,2 bzw. 2,3) vollständig übergreift und in dieser Stellung automatisch durch eine zylindrische Schraubenfeder (13) vorgespannt ist, die zwischen der Überschiebemuffe (12) und einem festen an einem der Stangenabschnitte (1 bzw. 2) befestigten Bundring (14) eingespannt ist, wobei ein fester am anderen Stangenabschnitt (3) befestigter Bundring (16) einen Anschlag für die Überschiebemuffe (12) in der fluchtenden Stellung der Rohrabschnitte (4,5 bzw. 5,6) bildet.

2. Abschleppstange nach Anspruch 1, dadurch **gekennzeichnet,** daß die dem freien Stangenende (18) des betreffenden Stangenabschnitts drehbar zugeordnete Einhängevorrichtung (22) einen widerstandsfähigen, C-förmigen Körper mit einem zylindrischen Ansatz (27) aufweist, wobei dieser zylindrische Ansatz (27) in einer mit einer äußeren umlaufenden Nut (31) versehenen Buchse (30) gelagert und nach seiner Einführung in die Buchse (30) durch einen Querstift (32) und eine Unterlegscheibe (33) in der Buchse (30) gehaltert ist, während die Buchse (30) nach ihrer Einführung in das rohrförmige Stangenende (18) des Stangenabschnitts durch Einbuchtung der Wandung des rohrförmigen Stangenendes (18) in die Nut (31) der Buchse (30) im Stangenabschnitt festgelegt ist.

3. Abschleppstange nach Anspruch 1 oder 2, dadurch **gekennzeichnet,** daß eine unverdrehbar dem freien Stangenende (19) des betreffenden Stangenabschnitts zugeordnete Einhängevorrichtung (21) im wesentlichen aus einem widerstandsfähigen, C-förmigen Körper besteht, der einen zylindrischen Ansatz (42) mit einer umlaufenden äußeren Nut (43) aufweist, wobei der Ansatz (42) nach seiner Einführung in den Stangenabschnitt an diesem durch Einbuchtung der Wandung des rohrförmigen Stangenendes (19) in die Nut (43) festgelegt ist.

4. Abschleppstange nach wenigstens einem der Ansprüche 1 bis 3, dadurch **gekennzeichnet,** daß die Vorrichtungen zum Schließen und Öffnen der Einhängevorrichtungen (20,21) je einen Bolzen (34) aufweisen, der in zwei an den Enden des C-förmigen Körpers ausgebildete Bohrungen (23,24;40,41) eingreift, wobei die gemeinsame Achse dieser Bohrungen parallel zur Achse des rohrförmigen Stangenendes (18,19) gerichtet ist und der Bolzen (34) mit einem Ende an einer Hülse (35) befestigt ist, die das rohrförmige Stangenende (18,19) umfaßt und in Richtung auf die zugehörige Einhängevorrichtung (20,21) durch eine zylindrische Schraubenfeder (36) gedrückt ist, die zwischen der Hülse (35) und einem festen, auf dem betreffenden Stangenabschnitt befestigten Bundring (14) eingespannt ist.

5. Abschleppstange nach Anspruch 4, dadurch **gekennzeichnet,** daß ein zwischen den Schraubenfedern (13,36) angeordneter Bundring (14) zur Abstützung beider Schraubenfedern (13,36) vorgesehen ist.

## Claims

1. A collapsible tow bar for vehicles, comprising a plurality of rigid, successive tubular bar sections (1, 2, 3) which are joined together pairwise via 180°-couplings (7) and which are lockable in the deployed position, in which their tube sections (4, 5, 6) are in alignment with one another, by means having a spring action, and provided at the extreme ends are coupling devices (21, 22) which are securable against unintentional uncoupling, wherein at least one coupling device (22) is rotatable relative to the relevant bar section (4), characterised in that each coupling (7) has an articulated plate (8) of which the ends are rotatably connected to the ends of two successive bar sections (1, 2 or 2, 3), wherein these ends of the bar sections (1, 2 or 2, 3) are provided with slits (11) which allow lateral emergence of the articulated plate (8) when they are swivelled into the collapsed position, and wherein the articulated plate (8) is of such a length that the distance between the swivel points is greater than the sum of the external radii of the two bar sections (1, 2 or 2, 3), and in that the spring action locking means has for each of the couplings (7) a sleeve (12) which, when the two relevant rod sections (1, 2 or 2, 3) are in alignment with one another, overlaps the coupling (7) entirely and in this position is automatically biassed by a cylindrical helical spring (13) that is fixed between the sleeve (12) and a solid collar (14) attached to one of the bar sections (1 or 2), wherein a solid collar (16) attached to the other bar section (3) forms a stop for the sleeve (12) when the tube sections (4, 5 or 5, 6) are in the aligned position.

2. A tow bar according to claim 1, characterised in that the coupling device (22) rotatably associated with the free bar end (18) of the relevant bar section has a robust, C-shaped body with a cylindrical extension (27), wherein this cylindrical extension (27) is mounted in a bush (30) that is provided with an encircling external groove (31) and after being inserted into the bush (30) is held by a cross-pin (32) and a washer (33) in the bush (30) while the bush (30), after being inserted into the tubular bar end (18) of the bar section, is secured in the bar section by indentation of the wall of the tubular bar end (18) into the groove (31) of the bush (30).

3. A tow bar according to claim 1 or claim 2, characterised in that a non-rotatable coupling device (21) associated with the free bar end (19) of the relevant bar section substantially comprises a robust, C-shaped body that has a cylindrical extension (42) with an encircling external groove (43), wherein the extension (42), after being inserted into the bar section, is attached thereto by indentation of the wall of the tubular bar end (19) into the groove (43).

4. A tow bar according to at least one of claims 1 to 3, characterised in that the devices for locking and unlocking the coupling devices (20, 21) each have a bolt (34) which engages in two bores (23, 24; 40, 41) formed in the ends of the C-shaped body, wherein the common axis of these bores is parallel to the axis of the tubular bar end (18, 19) and the bolt (34) is attached with one end to a sleeve (35) which surrounds the tubular bar end (18, 19) and is urged towards the associated coupling device (20, 21) by a cylindrical helical spring (26) that is fixed between the sleeve (35) and a solid collar (14) attached to the associated bar section.

5. A tow bar according to claim 4, characterised in that a collar (14) arranged between the helical springs (13, 36) is provided to support the two helical springs (13, 36).

**Revendications**

1. Barre de remorquage pliante pour des véhicules, se composant de plusieurs tronçons de barre (1, 2, 3) tubulaires rigides, disposés à la suite l'un de l'autre, appariés l'un à l'autre au moyen d'accouplements (7) à 180° et pouvant être verrouillés en position déployée dans laquelle les tronçonS tubulaires (4, 5, 6) sont alignés entre eux, au moyen d'un dispositif à ressort, tandis que des dispositifs d'attelage (21, 22) sont prévus sur les extrémités extérieures en pouvant être chaque fois protégés contre un décrochage Involontaire, tandis qu'au moins un (22) de ceux-ci est rotatif par rapport au tronçon tubulaire (4) correspondant, **caractérisée** en ce que chaque accouplement (7) présente une latte à pivots (8) dont les extrémités sont articulées avec les extrémités de deux tronçons de barre (1, 2 ou 2, 3) consécutifs, ces extrémités des tronçons de barre (1, 2 ou 2, 3) étant pourvues de fentes (11) qui permettent un dégagement latéral de la latte à pivots (8) lors du pivotement de ces tronçons les amenant en position repliée, tandis que la latte à pivots (8) présente une longueur telle que la distance entre ses points d'articulation est plus grande que la somme des demi-diamètres extérieurs des deux tronçons de barre (1, 2 ou 2, 3), et en ce que le dispositif d'arrêt à ressort pour chacun des accouplements (7) présente un manchon coulissant (12) qui recouvre complètement l'accouplement (7) quand les deux tronçons respectifs de la barre (1, 2 ou 2, 3) sont en position alignée entre eux, et qui est automatiquement sollicité dans cette position par un ressort hélicoïdal (13) qui est comprimé entre le manchon coulissant (12) et une bague à collerette (14) fixée à un des tronçons (1 ou 2) de la barre, tandis qu'une bague à collerette (16) fixée à l'autre tronçon (3) de la barre constitue une butée pour le manchon coulissant (12) quand les tronçons tubulaires (4, 5 ou 5, 6) sont en position alignée.

2. Barre de remorquage selon la revendication 1, caractérisée en ce que le dispositif d'attelage (22) associé rotativement à l'extrémité libre (18) du tronçon correspondant de la barre présente un corps résistant en forme de C avec un appendice cylindrique (27), cet appendice cylindrique (27) étant monté pivotant dans une douille (30) munie d'une gorge extérieure périphérique (31) et étant maintenu, après son introduction dans la douille (30), dans cette douille (30) au moyen d'un goujon transversal (32) et d'une rondelle (33), tandis que la douille (30) est fixée, après son introduction dans l'extrémité tubulaire (18) du tronçon de tube, par sertissage de la paroi de l'extrémité tubulaire (18) de la barre dans la gorge (31) de la douille (30) dans le tronçon de la barre.

3. Barre de remorquage selon la revendication 1 ou 2, caractérisée en ce qu'un dispositif d'attelage (21) associé, en étant empêché de tourner, à l'extrémité libre (19) du tronçon de barre correspondant, consiste essentiellement en un corps résistant en forme de C présentant un appendice cylindrique (42) avec une gorge extérieure périphérique (43), l'appendice (42) étant, après son introduction dans le tronçon de la barre, fixé à celui-ci par sertissage de la paroi de l'extrémité tubulaire (19) de la barre dans la gorge (43).

4. Barre de remorquage selon au moins une des revendications 1 à 3, caractérisée en ce que les dispositifs pour fermer et ouvrir les dispositifs d'attelage (20, 21) présentent chacun un goujon (34) qui s'engage dans deux alésages (23, 24; 40, 41) ménagés sur les extrémités des corps en forme de C, l'axe commun de ces alésages étant parallèle à l'axe de l'extrémité tubulaire (18, 19) de la barre et le goujon (34) étant fixé par une de ses extrémités à une douille (35) qui entoure l'extrémité tubulaire (18, 19) de la barre et est poussée en direction du dispositif d'attelage (20,21) correspondant par un ressort cylindrique hélicoïdal (36) qui est comprimé entre la douille (35) et une bague à collerette (14) fixée sur le tronçon de barre correspondant.

5. Barre de remorquage selon la revendication 4, caractérisée en ce qu'il est prévu une bague à collerette (14) disposée entre les ressorts hélicoïdaux (13, 36) pour l'appui de ces deux ressorts (13, 36).

Fig. 1

Fig. 4

Fig. 2

Fig. 3

Fig.5

Fig.6

Fig.7